(19) Europäisches Patentamt
European Patent Office
Office européen des brevets

(11) **EP 1 607 273 A1**

(12) **EUROPÄISCHE PATENTANMELDUNG**

(43) Veröffentlichungstag:
**21.12.2005 Patentblatt 2005/51**

(51) Int Cl.⁷: **B60R 21/01**

(21) Anmeldenummer: 05103685.3

(22) Anmeldetag: **03.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **19.06.2004 DE 102004029816**

(71) Anmelder: **ROBERT BOSCH GMBH**
**70442 Stuttgart (DE)**

(72) Erfinder:
- **Moldenhauer, Maike**
  **71111 Waldenbuch (DE)**
- **Wellhoefer, Matthias**
  **71701 Schwieberdingen (DE)**

(54) **Vorrichtung und Verfahren zur Erkennung eines Unfalls im Kraftfahrzeugbereich**

(57) Die vorliegende Erfmdung betrifft eine Vorrichtung und ein Verfahren zur Erkennung eines Unfalls im Kraftfahrzeugbereich mit mindestens einem peripheren Beschleunigungssensor (1, 7, 8, 9, 10, 11, 12, 13, 14) zur Erfassung von Beschleunigungsdaten (a) im Falle eines Unfalls, wobei der mindestens eine periphere Beschleunigungssensor (1, 7, 8, 9, 10, 11, 12, 13, 14) zum Erfassen eines kombinierten Signals, bestehend aus Beschleunigungsdaten ($a_X$) bezüglich der Längsachse des Fahrzeugs und aus Beschleunigungsdaten ($a_Y$) bezüglich der Querachse des Fahrzeugs, mit seiner Messachse (2) in der durch die Längsachse und die Querachse des Fahrzeugs aufgespannten Ebene unter einem vorbestimmten Neigewinkel ($\alpha$) bezüglich der Querachse geneigt in dem Fahrzeug montiert ist.

Fig. 3

EP 1 607 273 A1

## Beschreibung

STAND DER TECHNIK

Die vorliegende Erfmdung betrifft eine Vorrichtung und ein Verfahren zur Erkennung eines Unfalls im Kraftfahrzeugbereich, wobei mindestens ein peripherer Beschleunigungssensor zur Erfassung von Beschleunigungsdaten im Falle eines Unfalls verwendet wird und die entsprechend erfassten Signale ausgewertet werden.

Obwohl auf beliebige Messebenen anwendbar, werden die vorliegende Erfindung sowie die ihr zugrunde liegende Problematik in Bezug auf die durch die X-Achse defmierte Längsachse des Fahrzeugs und die durch die Y-Achse defmierte Querachse des Fahrzeugs aufgespannte Ebene näher erläutert.

Der Personenschutz im Kraftfahrzeug erlangt eine stetig steigende Bedeutung und es existieren bereits die unterschiedlichsten Systeme und Verfahren, durch welche die Insassen eines Kraftfahrzeuges im Falle eines Unfalls vor Verletzungen bewahrt werden bzw. durch welche derartige Verletzungen abgemildert werden können. Somit spielen aktive und passive Sicherheitssysteme im Kraftfahrzeugbereich eine immer größer werdende Rolle bei der Fortentwicklung von Fahrzeugen. Die Erwartungen der Kunden erfordern sowohl Leistungsfähigkeit und Komfort, gerichtet auf eine zunehmende Sicherheit für die Fahrzeuginsassen.

Unfallereignisse, welche mit einem seitlichen Aufprall auf das Fahrzeug verbunden sind, stellen für die Fahrzeuginsassen eine besonders große Gefährdung dar, denn einerseits bieten die Türbereiche schon von ihrer Konstruktion her und wegen fehlender Knautschzone einen geringeren Schutz als die in der Regel länger gebauten Front- und Heckbereiche eines Fahrzeugs. Andererseits steht aufgrund der geringeren Eindringwege nur eine wesentlich kürzere Vorwarnzeit für die Auslösung von Sicherungsmitteln für die Fahrzeuginsassen, wie beispielsweise Gassack und/oder Gurtstraffer, oder dergleichen, zur Verfügung. Diese Vorwarnzeit ist so gering, dass in der Regel zentral angeordnete Sensoren nicht mehr hinreichend schnell auf das Unfallereignis reagieren können. Eine Abhilfe stellen daher ausgelagerte Sensormodule dar, die vorzugsweise zusätzlich zu mindestens einem zentral angeordneten Sensor in einem Peripheriebereich des Fahrzeugs, insbesondere im Bereich der A-, B- oder C-Säulen oder der Türen, angeordnet sind. Derartige Sensoren werden oft als periphere Beschleunigungssensoren ausgebildet. Die rechtzeitige Sensierung eines Seitenaufpralls ist bei den heute üblichen Fahrzeugstrukturen nämlich nur durch Messung des Beschleunigungssignals an der seitlichen Fahrzeugperipherie (in der Tür, an der A-, B- oder C-Säule) mit hinreichender Sicherheit möglich. Ein Seitenaufprall, bei dem nicht nur der Kopf, sondern auch der Thoraxbereich eines Fahrzeuginsassen geschützt werden soll, muss bereits in einer extrem kurzen Zeit von nur beispielsweise 3 bis 5 Millisekunden nach Aufprallbeginn als verletzungskritisch erkannt und zur Vorsorge beispielsweise ein im Seitenbereich des Fahrzeugs angeordneter Gassack ausgelöst werden. Es können somit hier keine Signallaufzeiten bis zu einem beispielsweise in Fahrzeugmitte zentral angeordneten Sensor in Kauf genommen werden. Man kann die Beschleunigung nur im Außenbereich des Fahrzeugs messen, um dann entsprechend schnell reagieren zu können. Da die im Außenbereich des Fahrzeugs angeordneten Sensoren einen weiteren Kostenfaktor darstellen, ist man bestrebt, die Kosten für diese zusätzlichen Sensoren möglichst gering zu gestalten.

Gemäß dem Stand der Technik werden zum Detektieren von Fahrzeugunfällen demnach periphere Beschleunigungssensoren eingesetzt, welche mit einer zentralen Steuereinheit verbunden sind und vorzugsweise im Frontbereich des Fahrzeuges, beispielsweise auf Querträgern der Karosserie, angeordnet sind. Derartige Beschleunigungssensoren sollen im Falle eines Zusammenpralls Informationen über die frühe Phase des Unfalls erfassen und mittels der zentralen Steuereinheit bestimmte Rückhalte- bzw. Schutzmittel, wie beispielsweise einen Airbag, einen Sitzgurt, einen Überrollbügel, oder dergleichen auslösen. In der Deformationszone von Fahrzeugen, d.h. im Front-End, werden derzeit im allgemeinen einzelne sogenannte Upfront-Switches und Upfront-Sensoren integriert, um eine frühe Crash-Schwere- und Crash-Typ-Klassifizierung vorzunehmen. Bei den Upfront-Sensoren handelt es sich um uniaxiale Beschleunigungssensoren und ein Upfront-Switch ist ein einfacher Beschleunigungsschalter, der ab einer bestimmten Beschleunigung schließt. Dieser Schalter kann beispielsweise als Hamlin-Schalter ausgebildet sein, bei welchem ein rohrförmiger Permanentmagnet eine seismische Masse darstellt, die bei Beschleunigung auf einer Führung über einen Reed-Kontaktschalter gebracht wird und diesen bei einer bestimmten Beschleunigung schließt. Eine Feder befmdet sich zusätzlich auf der Führung, um eine Rückstellkraft darzustellen. Die uniaxialen Beschleunigungssensoren werden typischerweise im Front-End-Bereich zur Unfallerkennung und Unfallschwerediskriminierung von Frontalunfällen eingesetzt. Dabei werden sie derart verbaut, dass die Messachse parallel zur Fahrzeuglängsachse liegt, um im Falle eines Frontalunfalls optimal seine beschriebene Funktion ausüben zu können. Uniaxiale Beschleunigungssensoren werden ferner zur Sensierung eines Seitenunfalls verwendet. Dabei werden die peripheren Beschleunigungssensoren derart im Fahrzeug verbaut, dass die Messachse im 90°-Winkel zur Fahrzeuglängsachse orientiert ist, um ein optimales Signal im Falle eines Seitenunfalls zu detektieren.

An diesem Ansatz gemäß dem Stand der Technik hat sich jedoch die Tatsache als nachteilig herausgestellt, dass mit einer derartigen Sensorausrichtung ein Graubereich zwischen einem reinen Seitenunfall und einem reinen Frontalunfall, ein sogenannter Winkelunfall, äußerst schwer erfasst werden kann. Dies stellt in der Praxis häufig Probleme dar, sei es durch eine zu späte Auslösung oder durch sogar eine unterdrückte Auslösung, was ein vollständiges Fehlverhalten des Systems bedeutet.

Somit gilt allgemein das Problem zu lösen, einen Winkelunfall auf einfache und kostengünstige Weise zuverlässig und rechtzeitig zu erkennen und eine schnelle Reaktion des Rückhaltesystems zu gewährleisten, da bei Car-to-Car-Unfällen in der Praxis nur selten ein Unfallwinkel von 0° oder 90° auftritt, sondern meist ein dazwischen liegender Winkel existiert.

Gemäß einem Ansatz nach dem Stand der Technik werden zur Steigerung der Leistungsfähigkeit des Systems und für bessere Auslösezeiten anstelle von uniaxialen Beschleunigungssensoren biaxiale periphere Beschleunigungssensoren verwendet, welche sowohl in Fahrzeuglängsachse als auch im 90°-Winkel dazu, d.h. parallel zur Querachse, des Fahrzeugs sensieren. Dadurch kann eine eventuell frühere Plausibilisierung eines Unfalls ermöglicht werden, da erheblich mehr Sensorsignale für eine mögliche Plausibilisierung zur Verfügung stehen.

An diesem Ansatz gemäß dem Stand der Technik hat sich jedoch die Tatsache als nachteilig herausgestellt, dass biaxiale Beschleunigungssensoren erheblich teurer sind als uniaxiale periphere Beschleunigungssensoren, so dass insgesamt die Vorrichtung zur Erkennung eines Unfalls aufgrund mehrerer verwendeter biaxialer Beschleunigungssensoren erheblich kostenintensiver wird.

Somit liegt der vorliegenden Erfmdung allgemein die Aufgabe zugrunde, eine Vorrichtung und ein Verfahren zur Erkennung eines Unfalls im Kraftfahrzeugbereich zu schaffen, mit welcher auf kostengünstige Weise ein Unfall eines Fahrzeugs, insbesondere auch eines Winkelunfalls, zuverlässig und mit einer kurzen Auslösezeit erkennbar ist.

VORTEILE DER ERFINDUNG

Diese Aufgabe wird erfindungsgemäß vorrichtungsseitig durch die Vorrichtung mit den Merkmalen gemäß Patentanspruch 1 und verfahrensseitig durch das Verfahren mit den Merkmalen gemäß Patentanspruch 17 gelöst.

Die der vorliegenden Erfindung zugrunde liegende Idee besteht darin, dass mindestens ein peripherer Beschleunigungssensor zur Erfassung von Beschleunigungsdaten im Falle eines Unfalls mit seiner Messachse in der durch die Längsachse und die Querachse des Fahrzeugs aufgespannten Ebene unter einem vorbestimmten Neigewinkel bezüglich der Querachse geneigt in dem Fahrzeug montiert ist, um ein kombiniertes Signal, bestehend aus Beschleunigungsdaten bezüglich der Längsachse des Fahrzeugs und aus Beschleunigungsdaten bezüglich der Querachse des Fahrzeugs, zu erfassen.

Die erFmdungsgemäße Vorrichtung mit den Merkmalen des Anspruchs 1 sowie das erfindungsgemäße Verfahren mit den Merkmalen des Anspruchs 17 weisen gegenüber den bekannten Lösungsansätzen gemäß dem Stand der Technik den Vorteil auf, dass uniaxiale periphere Beschleunigungssensoren für eine gleichzeitige Erfassung von Beschleunigungsdaten bezüglich sowohl der Längsachse als auch der Querachse des Fahrzeugs verwendet werden können. Somit werden die Kosten der Vorrichtung erheblich reduziert, da auf den Einsatz von teureren biaxialen Beschleunigungssensoren verzichtet werden kann.

Ferner wird insbesondere bei Winkelunfällen eine ausreichende Leistungsfähigkeit gewährleistet, da keine größeren Zeitverzögerungen für ein Erkennen der Winkelunfälle auftreten. Somit können für einen Insassenschutz geeignete Sicherheitssysteme im Falle eines Winkelunfalls rechtzeitig ausgelöst werden.

In den Unteransprüchen fmden sich vorteilhafte Weiterbildungen und Verbesserungen der im Anspruch 1 angegebenen Vorrichtung und des im Anspruch 17 angegebenen Verfahrens.

Gemäß einer bevorzugten Weiterbildung sind mehrere periphere Beschleunigungssensoren an verschiedenen Positionen im Fahrzeug jeweils derart montiert, dass ihre Messachse in der durch die Längsachse und die Querachse des Fahrzeugs aufgespannten Ebene unter einem vorbestimmten Neigewinkel bezüglich der Querachse geneigt sind. Dabei beträgt der Neigewinkel in etwa zwischen 30° und 60°, vorzugsweise in etwa 45°. Es hat sich herausgestellt, dass die meisten seitlichen Auffahrunfälle in etwa unter einem Winkel von 45° auftreten.

Gemäß einem weiteren bevorzugten Ausführungsbeispiel wird der vorbestimmte Neigewinkel des bzw. der peripheren Beschleunigungssensoren durch die Form des Gehäuses beim Einbau, durch entsprechende Orientierung des Messelementes bezüglich des Gehäuses und/oder dadurch festgelegt, dass der zugeordnete Beschleunigungschip mit dem Neigewinkel auf der entsprechenden Platine des Beschleunigungssensors angeordnet ist. Entscheidend ist lediglich, dass bei einem Einbau der peripheren Beschleunigungssensoren die Messachse exakt unter dem vorbestimmten Neigewinkel in dem Kraftfahrzeug eingebaut ist.

Vorzugsweise sind im Frontbereich, im Heckbereich, in der A-Säule, in der B-Säule und/oder in der C-Säule, oder dergleichen periphere Beschleunigungssensoren mit einem vorbestimmten Neigewinkel der Messachse in dem Kraftfahrzeug montiert. Beispielsweise befindet sich mindestens einer der peripheren Beschleunigungssensoren mit einem vorbestimmten Neigewinkel seiner Messachse in Richtung des Frontbereichs und mindestens einer der peripheren Beschleunigungssensoren mit einem vorbestimmten Neigewinkel seiner Messachse in Richtung des Heckbereiches in schräg montierter Einbaulage.

Gemäß einem weiteren bevorzugten Ausführungsbeispiel ist ein Datenvorverarbeitungsmodul mit den peripheren Beschleunigungssensoren verbunden und wandelt die empfangenen Signale in Beschleunigungsdaten bezüglich der Längsachse des Fahrzeugs und in Beschleunigungsdaten bezüglich der Querachse des Fahrzeugs durch Berechnung der jeweiligen Projektionen auf diese Achsen um. Dabei können die Beschleunigungssensoren selbst die jeweiligen Projektionen der empfangenen Beschleunigungssignale berechnen und entweder ständig zusammen mit den Beschleunigungssignalen an eine angeschlossene Steuereinheit übertragen, oder alternativ lediglich dann an die angeschlossene Steuereinheit übertragen, wenn vorbestimmte Schwellwerte überschritten werden. Diese Schwellwerte können beispielsweise in einer mit der zentralen Steuereinheit verbundenen Speichereinrichtung vorab abgespeichert werden.

Vorteilhaft sind zusätzlich zu den mehreren peripheren uniaxialen Beschleunigungssensoren vorzugsweise mehrere uni- und/oder biaxiale Beschleunigungssensoren vorgesehen, welche an verschiedenen Positionen im Fahrzeug jeweils mit ihren Messachsen in Richtung der Längsachse und/oder in Richtung der Querachse des Fahrzeugs montiert sind. Somit werden neben Winkelunfällen auch Frontalunfälle in optimaler Weise detektiert. Besonders vorteilhaft wird mindestens ein peripherer Beschleunigungssensor mit einem vorbestimmten Neigewinkel der Messachse von in etwa 45° jeweils sowohl in der A- als auch in der C-Säule jeder Fahrzeugseite und mindestens ein peripherer Beschleunigungssensor mit seiner Messachse in Richtung der Längsachse des Fahrzeugs in der B-Säule jeder Fahrzeugseite montiert. Dadurch werden bestimmte Messbereiche bzw. Winkelbereiche in optimaler Weise abgedeckt und eine Detektion von sowohl Frontal- als auch von Winkelunfällen in zuverlässiger Weise gewährleistet.

ZEICHNUNGEN

Im folgenden werden besonders vorteilhafte Ausführungsbeispiele der vorliegenden Erfindung unter Bezugnahme auf die Figuren der Zeichnung näher erläutert. Von den Figuren zeigen:

Figur 1    eine schematische Darstellung für eine Berechnung der Projektionen des erfassten Beschleunigungssignals auf die Fahrzeuglängsachse und die Fahrzeugquerachse;

Figur 2    ein Blockdiagramm einer erfmdungsgemäßen Vorrichtung gemäß einem Ausführungsbeispiel der vorliegenden Erfindung;

Figur 3    eine schematische Darstellung eines Winkelunfalls sowie eine Anordnung von mehreren peripheren Beschleunigungssensoren in einem Fahrzeug gemäß einem ersten Ausführungsbeispiel der vorliegenden Erfindung;

Figur 4    eine Darstellung einer Anordnung von mehreren Beschleunigungssensoren in einem Fahrzeug gemäß einem zweiten Ausführungsbeispiel der vorliegenden Erfindung;

Figur 5    eine Darstellung einer Anordnung von mehreren Beschleunigungssensoren in einem Fahrzeug gemäß einem dritten Ausführungsbeispiel der vorliegenden Erfindung;

Figur 6    eine Darstellung einer Anordnung von mehreren Beschleunigungssensoren in einem Fahrzeug gemäß einem vierten Ausführungsbeispiel der vorliegenden Erfindung; und

Figur 7    eine Darstellung einer Anordnung von mehreren Beschleunigungssensoren in einem Fahrzeug gemäß einem fünften Ausführungsbeispiel der vorliegenden Erfindung.

BESCHREIBUNG DER AUSFÜHRUNGSBEISPIELE

In den Figuren bezeichnen gleiche Bezugszeichen gleiche oder funktionsgleiche Komponenten, soweit nichts Gegenteiliges angegeben ist.

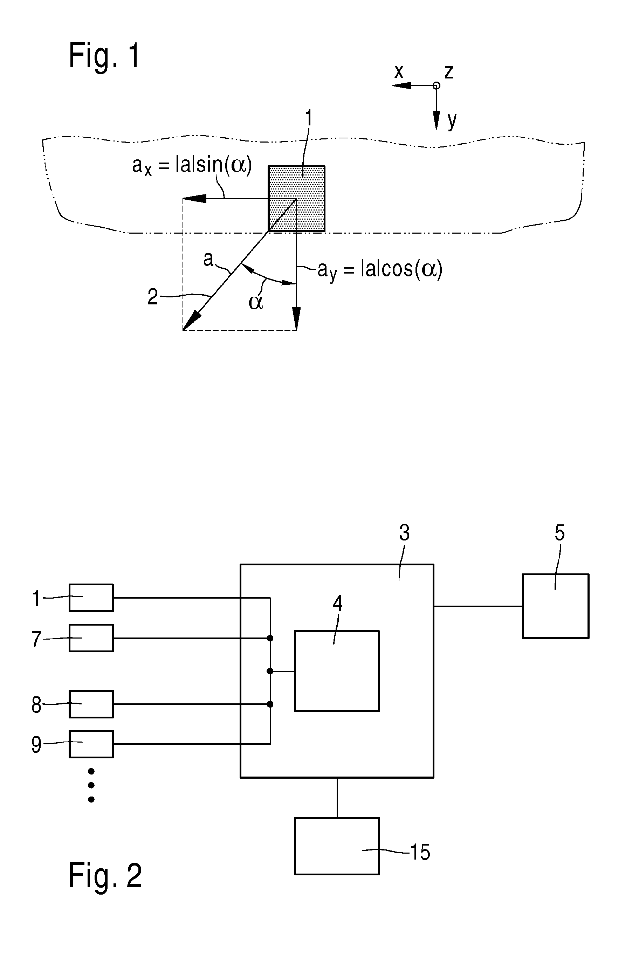

Figur 1 illustriert eine schematische Darstellung eines in einem Kraftfahrzeug integrierten peripheren uniaxialen Beschleunigungssensors 1, dessen Messachse 2 unter einem Neigewinkel $\alpha$ bezüglich der Y-Achse bzw. der Querachse des Fahrzeugs in Richtung der Fahrzeugvorderseite geneigt eingebaut ist. Dabei empfängt der periphere Beschleunigungssensor 1 ein Beschleunigungssignal a, welches ein Maß für die Beschleunigung in Richtung der Messachse 2 darstellt. Wie in Figur 1 dargestellt ist, kann das Beschleunigungssignal a in Richtung der Messachse 2 durch Berechnen der jeweiligen Projektionen in ein Beschleunigungssignal $a_X$ bezüglich der X-Achse und ein Signal $a_Y$ bezüglich der Y-Achse des Fahrzeugs umgewandelt werden. Dabei ergeben sich die Projektionen auf die X-Achse bzw. Längsachse des Fahrzeugs und die Y-Achse bzw. Querachse des Fahrzeugs durch folgende Gleichungen:

$$(1) \qquad a_X = |a| \sin(\alpha) ;$$

und

$$a_Y = |a| \cos(\alpha) ;$$

wobei a die kombinierte Beschleunigung in Richtung der Messachse und $\alpha$ der Neigewinkel der Messachse bezüglich der Querrichtung des Fahrzeugs bezeichnen.

Der Neigewinkel α liegt ungefähr zwischen 30° und 60°, und beträgt insbesondere in etwa 45°. Bei einem Neigewinkel α von 45° wird am besten gewährleistet, dass die Projektionen der Beschleunigung in Richtung der Messachse auf die Längs- bzw. Querachse des Fahrzeugs einen genügend großen Betrag für eine zuverlässige Detektion eines etwaigen Unfalls darstellen. Selbstverständlich können auch andere Neigewinkel verwendet werden.

Eine Neigung der Messachse 2 kann z.B. dadurch realisiert sein, dass ein 45°-Beschleunigungssorelement verwendet wird, welches die Beschleunigung im 45°-Winkel zur Sensorchip-Verpackung (molding) misst. Das Beschleunigungssensorelement ist vorzugsweise im 45°-Winkel zum Chipgehäuse orientiert und intern derart gebondet, dass die Messachse bzw. die Sensierrichtung genau 45° beträgt. Alternativ kann ein herkömmlicher Beschleunigungssensorchip auch in einem 45°-Winkel auf der Platine des Sensors aufgebracht sein. Weiterhin kann alternativ dazu auch eine bestimmte Gehäuseform die Ausrichtung der Messachse 2 unter einem 45°-Winkel bezüglich der Querachse bei einem Montageeinbau garantieren.

Somit erfasst ein uniaxialer peripherer Beschleunigungssensor 1 aufgrund des schrägen Einbaus seiner Messachse 2 ein kombiniertes Beschleunigungssignal bzw. drei auswertbare Signalverläufe, nämlich die Beschleunigung a in Richtung der Messachse und die Projektionen $a_X$ und $a_Y$ der Beschleunigung in Richtung der Längsachse (X-Achse) und in Richtung der Querachse (Y-Achse) des Fahrzeugs.

Vorzugsweise werden mehrere periphere uniaxiale Beschleunigungssensoren 1 an verschiedenen Positionen des Fahrzeugs, vorzugsweise an möglichst stabilen Montagepunkten, d.h. nicht im Bereich der Knautschzonen, montiert.

Figur 2 illustriert ein Blockdiagramm einer Vorrichtung zur Erkennung eines Unfalls gemäß einem bevorzugten Ausführungsbeispiel der vorliegenden Erfindung. Wie in Figur 2 ersichtlich ist, weist die Vorrichtung vorzugsweise eine zentrale Steuereinheit 3 auf, in welcher beispielsweise ein Datenvorverarbeitungsmodul 4 integriert ist. Sämtliche periphere Beschleunigungssensoren 1, 7, 8, 9, usw. sind vorzugsweise mit dem Datenvorverarbeitungsmodul 4 signalverbunden und übertragen jeweils die erfassten Beschleunigungssignale über entsprechend zugeordnete Leitungen an das Datenvorverarbeitungsmodul 4. Das Datenvorverarbeitungsmodul 4 empfängt die erfassten Beschleunigungssignale der einzelnen peripheren Beschleunigungssensoren 1, 7, 8, 9, usw., digitalisiert diese Daten und bereitet diese auf. Eine Berechnung der Projektionen des Beschleunigungssignals auf die Längs- und Querachse des Fahrzeugs kann unter Kenntnis des Neigewinkels α in dem Datenvorverarbeitungsmodul 4 durch den oben beschriebenen Algorithmus in der zentralen Steuereinheit 3 erfolgen. Alternativ können jedoch die einzelnen peripheren Beschleunigungssensoren 1, 7, 8, 9, usw. selbst die Projektionen berechnen und diese zusätzlichen Daten entweder ständig mit dem Beschleunigungsignal a bzgl. der Messachse an die zentralen Steuereinheit übertragen oder alternativ in Abhängigkeit von einer Überschreitung von vorbestimmten Schwellwerten lediglich dann an die zentrale Steuereinheit übertragen, wenn ein vorab bestimmter Schwellwert durch die einzelnen Beschleunigungsdaten überschritten wird. Die Schwellwerte können beispielsweise in einer Speichereinrichtung 5 vorab abgespeichert werden, welche vorzugsweise mit der zentralen Steuereinheit 3 verbunden ist.

Im Falle eines Erfassens eines Unfalls durch die zentrale Steuereinheit kann diese geeignete Rückhalte- bzw. Schutzsysteme 15 für einen Schutz der Fahrzeuginsassen aktivieren, welche wiederum über beispielsweise einen CAN-Fahrzeugbus mit der zentralen Steuereinheit 3 verbunden sind. Derartige Rückhalte- bzw. Schutzsysteme 15 sind beispielsweise als Seiten-Airbag, Frontal-Airbag, Überrollbügel, Gurtstraffer, oder dergleichen ausgebildet.

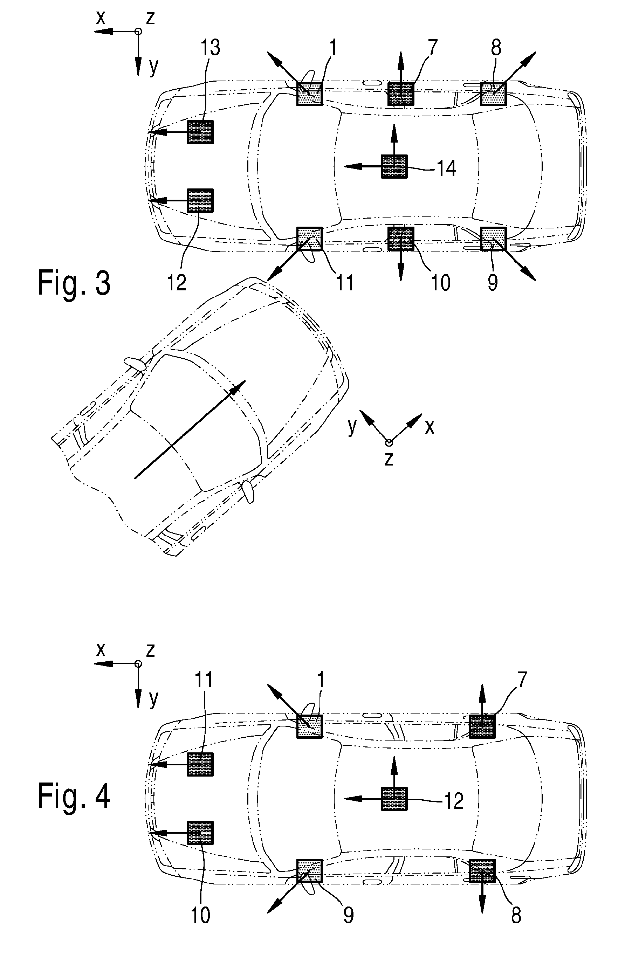

Im folgenden werden rein exemplarisch einige vorteilhafte Sensoranordnungen unter Bezugnahme auf die Figuren 3 bis 7 näher beschrieben. Den nachfolgenden Ausführungen vorausgeschickt seien folgende Erläuterungen von im Automobilbereich verwendeten Fachbegriffen. Bei selbsttragenden Karosserien unterscheidet man drei Säulen, die A-, die B- und die C-Säule. Bei einem normalen Pkw befmdet sich die A-Säule direkt vor den vorderen Türen und verläuft bis zum vorderen Fahrzeugdach. Die B-Säule liegt zwischen der vorderen Tür und der hinteren Tür bzw. zwischen der vorderen Tür und dem Seitenteil. Die C-Säule befindet sich hinter der hinteren Tür bei einem 4-Türer und geht auf Höhe der Hinterachse bei einem 2-Türer in das Seitenteil über.

Figur 3 illustriert eine schematische Darstellung eines Winkelunfalls, wobei eine Anordnung von mehreren peripheren Beschleunigungssensoren gemäß einem ersten Ausführungsbeispiel der vorliegenden Erfindung dargestellt ist.

Wie in Figur 3 ersichtlich ist, sind beispielsweise zwei uniaxiale Beschleunigungssensoren 12 und 13 im Frontbereich des Fahrzeuges zur Erkennung eines Frontalunfalls montiert. Die peripheren Beschleunigungssensoren 12 und 13 besitzen jeweils eine Messachse, die in Richtung der Längsachse des Fahrzeugs ausgerichtet ist.

Ferner ist an jeder Fahrzeugseite jeweils ein peripherer Beschleunigungssensor 1 bzw. 11 im Bereich der A-Säule derart montiert, dass die Messachsen jeweils unter einem Neigewinkel α von 45° in Richtung der Fahrzeugvorderseite bezüglich der durch die Fahrzeuglängs- und die Fahrzeugquerachse aufgespannten Ebene schräg montiert sind.

Ferner sind gemäß dem vorliegenden Ausführungsbeispiel an jeder Fahrzeugseite jeweils ein peripherer uniaxialer Beschleunigungssensor 8 bzw. 9 im Bereich der C-Säule derart montiert, dass die Beschleunigungssensoren 8, 9 jeweils einen Neigewinkel α von 45° bezüglich der Querachse in Richtung des Fahrzeughecks aufweisen.

Zusätzlich können weitere periphere Beschleunigungssensoren 7 und 10 vorgesehen sein, die jeweils an einer Fahrzeuglängsseite im Bereich der B-Säule derart montiert sind, dass ihre Messachsen jeweils parallel zur Querachse des Fahrzeugs ausgerichtet sind. Zusätzlich ist vorteilhaft ein biaxialer peripherer Beschleunigungssensor 14 mittig im Kraftfahrzeug, beispielsweise im Dachbereich, derart montiert, dass eine erste seiner Messachsen in Richtung der Fahrzeuglängsachse und die andere Messachse in Richtung der Fahrzeugquerachse, d.h. 90° zu der ersten Messachse, ausgerichtet ist.

Somit können durch die peripheren Beschleunigungssensoren 1, 11 und 8, 9 auf optimale Weise Seitenunfälle frühzeitig erkannt und entsprechende Signale an die zentrale Steuereinheit 3 für eine sofortige Einleitung bzw. Aktivierung von geeigneten Rückhaltesystemen 15 gesendet werden. Ferner können durch die Beschleunigungssensoren 12 und 13 Frontalunfälle auf günstige Weise detektiert werden, wobei durch die Projektionen auf die entsprechenden Fahrzeugachsen zusätzliche Plausibilitätsmöglichkeiten zur Verfügung gestellt werden. Bei einem Frontalunfall bietet die Projektion des eine schräge Messachse aufweisenden Beschleunigungssensors auf die Längsachse und bei Seitenunfällen die Projektion auf die Fahrzeugquerachse zusätzliche Plausibilitätsmöglichkeiten.

Durch die in Figur 3 dargestellte Anordnung von verschiedenen Beschleunigungssensoren können auch Car-to-Car-Unfälle im Heckbereich mitabgedeckt werden. Somit besteht ein optimales System aus einer Kombination von mehreren eine schräg eingebaute Messachse aufweisenden peripheren Beschleunigungssensoren und aus mehreren eine entweder in Richtung der Fahrzeuglängsachse und/oder in Richtung der Fahrzeugquerachse ausgerichteten Messachse aufweisende Beschleunigungssensoren. Somit wird dem jeweiligen Anwendungsfall entsprechend durch verschiedene Anordnungen von Beschleunigungssensoren ein sicherer und robuster Rundumschutz erreicht, indem sowohl Front- und Heckunfälle als auch Seiten-Unfälle zuverlässig und ohne einer größeren Zeitverzögerung erfasst und ausgewertet werden können.

Figur 4 illustriert eine schematische Darstellung einer Anordnung von mehreren Beschleunigungssensoren gemäß einem zweiten Ausführungsbeispiel der vorliegenden Erfindung. Im Unterschied zum ersten Ausführungsbeispiel sind im Bereich der C-Säule die eine geneigte Messachse aufweisenden uniaxialen Beschleunigungssensoren des ersten Ausführungsbeispiels durch eine in Richtung der Fahrzeugquerachse verlaufende Messachse aufweisenden Beschleunigungssensoren 7 und 8 ersetzt, wobei auf Beschleunigungssensoren im Bereich der B-Säule verzichtet wird. Dadurch können die Kosten reduziert werden, da man auf zwei Sensorelemente verzichtet. Allerdings sind Heckunfälle im Vergleich zum ersten Ausführungsbeispiel schwerer zu detektieren.

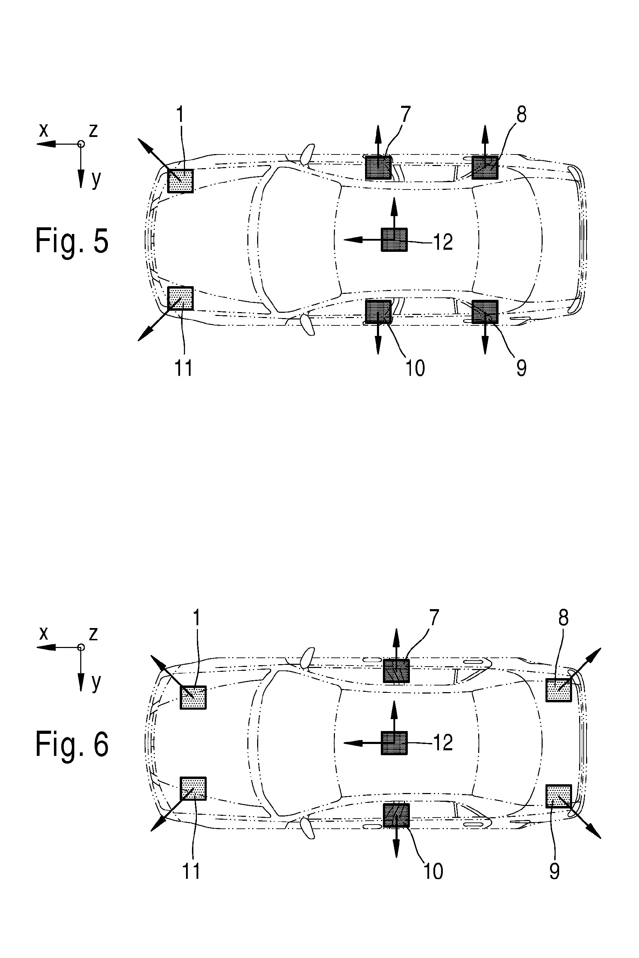

Figur 5 illustriert eine Darstellung einer Anordnung von Beschleunigungssensoren gemäß einem dritten Ausführungsbeispiel der vorliegenden Erfindung. Wie in Figur 5 ersichtlich ist, sind im Frontbereich des Fahrzeugs an jeder Seite jeweils ein uniaxialer peripherer Beschleunigungssensor 1 bzw. 11 mit einer vorzugsweise um 45° schräg orientierten Messachse in Richtung der Fahrzeugvorderseite montiert. Zusätzlich sind an jeder Fahrzeugseite sowohl im Bereich der B-Säule als auch im Bereich der C-Säule jeweils ein uniaxialer Beschleunigungssensor 7 bzw. 10, 8 bzw. 9, montiert, welche jeweils eine Messachse aufweisen, die parallel zur Fahrzeugquerachse ausgerichtet ist. Zusätzlich ist wiederum ein mittiger beispielsweise biaxialer Beschleunigungssensor 12, beispielsweise im Dachbereich, angeordnet, welcher eine Messachse in Richtung der Fahrzeuglängsachse und die andere Messachse in Richtung der Fahrzeugquerachse aufweist.

Figur 6 illustriert eine Darstellung einer Anordnung von mehreren Beschleunigungssensoren gemäß einem vierten Ausführungsbeispiel der vorliegenden Erfindung. Im Unterschied zum dritten Ausführungsbeispiel gemäß Figur 5 wird auf die beiden uniaxialen Beschleunigungssensoren im Bereich der C-Säule verzichtet. Allerdings werden zusätzlich im Heckbereich zwei uniaxiale periphere Beschleunigungssensoren 8 und 9 im Fahrzeug montiert, welche jeweils eine Messachse aufweisen, die um vorzugsweise 45° in der durch die Quer- und die Längsachse des Fahrzeugs aufgespannten Ebene in Richtung der Fahrzeugrückseite gekippt bzw. geneigt eingebaut sind. Mit einer derartigen Anordnung können sowohl Frontal- und Heckunfälle als auch Seitenunfälle in geeigneter Weise detektiert und ausgewertet werden.

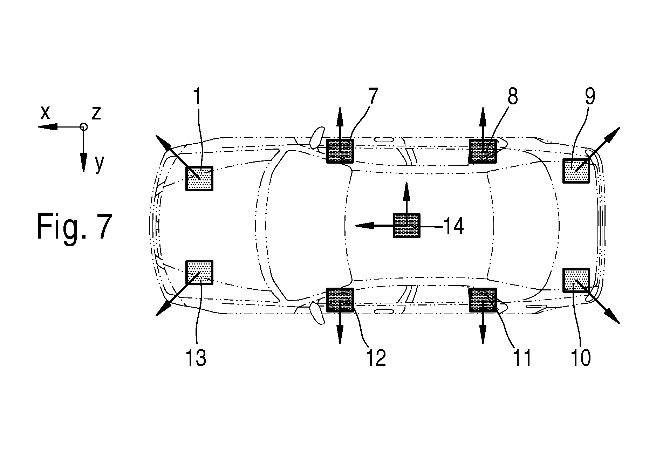

Figur 7 illustriert schließlich eine Darstellung einer Anordnung von mehreren Beschleunigungssensoren gemäß einem fünften Ausführungsbeispiel der vorliegenden Erfindung. Im Unterschied zum vierten Ausführungsbeispiel gemäß Figur 6 ist gemäß dem vorliegenden Ausführungsbeispiel auf die beiden im Bereich der B-Säule des Fahrzeugs angeordneten Beschleunigungssensoren verzichtet worden. Allerdings sind zusätzlich auf jeder Fahrzeugseite jeweils ein uniaxialer Beschleunigungssen sor sowohl im Bereich der A-Säule als auch im Bereich der C-Säule montiert. Die zusätzlichen peripheren Beschleunigungssensoren 7, 8, 11 und 12 weisen jeweils eine Messachse auf, die parallel zur Querrichtung des Fahrzeugs ausgerichtet ist. Somit wird wiederum ein vorbestimmter Bereich um das Fahrzeug herum abgetastet, wobei die entsprechend aufgenommenen Signale durch Berechnen der einzelnen Projektionen eine Klassifizierung eines etwaigen Unfalls gewährleisten und ohne größerer Verzögerung den Unfalltyp und die Unfallschwere signalisieren.

Somit wird das Fahrzeug mit einer geeigneten Vorrichtung zum Erkennen eines Unfalls ausgestattet, welches über unidirektionale Beschleunigungssensoren verfügt, welche entweder in einem Winkel zwischen 0° und 90° bezüglich der Fahrzeugquerachse in dem Fahrzeug in Richtung der Vorderseite oder in Richtung der Rückseite geneigt verbaut sind, und welches zusätzlich uniaxiale oder biaxiale Beschleunigungssensoren aufweist, welche ihre Messachsen entweder in Längsrichtung oder in Querrichtung des Fahrzeugs aufweisen. Die eine schräge Messachse aufweisenden Beschleunigungssensoren senden zusätzliche Informationen, z.B. die Projektionen der Beschleunigungswerte, parallel zur Fahrzeuglängsachse und parallel zur Fahrzeugquerachse, dauerhaft oder zumindest zeitweise an eine zentrale Steuereinheit. Somit werden zusätzlich zum eigentlichen Beschleunigungssignal die orthogonalen Projektionen auf die Fahrzeughauptachsen im Algorithmus Unfalldiskriminierung verwendet. Das Fahrzeug bietet somit einen Rundumschutz, mit optimaler Leistung, insbesondere bei Winkelunfällen. Somit kann eine rechtzeitige Auslösung von Rückhaltesystemen bei Winkelunfällen auf einfache und kostengünstige Weise gewährleistet werden. Man erreicht eine stärkere Abdeckung der Fahrzeugumgebung mit einer gleichbleibenden Anzahl an Sensorelementen. Dadurch können Kosten reduziert und die Anzahl der Bauelemente bzw. der Verkabelungsaufwand vermindert werden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise können die uniaxialen Beschleunigungssensoren auch durch ebenfalls biaxiale oder sogar triaxiale Beschleunigungssensoren ersetzt werden. Gleiches gilt für die in den Ausführungsbeispielen angegebenen biaxialen Beschleunigungssensoren.

**Patentansprüche**

1. Vorrichtung zur Erkennung eines Unfalls im Kraftfahrzeugbereich mit:

   mindestens einem peripheren Beschleunigungssensor (1, 7, 8, 9, 10, 11, 12, 13, 14) zur Erfassung von Beschleunigungsdaten im Falle eines Unfalls;

   **dadurch gekennzeichnet,**
   **dass** der mindestens eine periphere Beschleunigungssensor (1, 7, 8, 9, 10, 11, 12, 13, 14) zum Erfassen eines kombinierten Signals, bestehend aus Beschleunigungsdaten bezüglich der Längsachse des Fahrzeugs und aus Beschleunigungsdaten bezüglich der Querachse des Fahrzeugs, mit seiner Messachse (2) in der durch die Längsachse und die Querachse des Fahrzeugs aufgespannten Ebene unter einem vorbestimmten Neigewinkel ($\alpha$) bezüglich der Querachse geneigt in dem Fahrzeug montiert ist.

2. Vorrichtung nach Anspruch 1,
   **dadurch gekennzeichnet,**
   **dass** mehrere periphere Beschleunigungssensoren (1, 7, 8, 9, 10, 11, 12, 13, 14) vorgesehen sind, welche an verschiedenen Positionen im Fahrzeug jeweils mit ihren Messachsen (2) in der durch die Längsachse und die Querachse des Fahrzeugs aufgespannten Ebene unter einem vorbestimmten Neigewinkel ($\alpha$) bezüglich der Querachse geneigt montiert sind.

3. Vorrichtung nach Anspruch 1 oder 2,
   **dadurch gekennzeichnet,**
   **dass** der mindestens eine periphere Beschleunigungssensor als uniaxialer Beschleunigungssensor ausgebildet ist.

4. Vorrichtung nach wenigstens einem der vorhergehenden Ansprüche,
   **dadurch gekennzeichnet,**
   **dass** der Neigewinkel ($\alpha$) zwischen 30° und 60°, vorzugsweise in etwa 45° beträgt.

5. Vorrichtung nach wenigstens einem der vorhergehenden Ansprüche,
   **dadurch gekennzeichnet,**
   **dass** der mindestens eine periphere Beschleunigungssensor durch die Form seines Gehäuses den Neigewinkel beim Einbau festlegt.

6. Vorrichtung nach wenigstens einem der vorhergehenden Ansprüche,
   **dadurch gekennzeichnet,**
   **dass** der mindestens eine periphere Beschleunigungssensor durch entsprechende Orientierung des Messelementes des Beschleunigungssensors bezüglich des Gehäuses den Neigewinkel beim Einbau festlegt.

7. Vorrichtung nach wenigstens einem der vorhergehenden Ansprüche,
   **dadurch gekennzeichnet,**
   **dass** der dem mindestens einen peripheren Beschleunigungssensor zugeordnete Beschleunigungschip mit dem gewünschten Neigewinkel ($\alpha$) auf der entsprechenden Platine des Beschleunigungssensors angeordnet ist.

8. Vorrichtung nach wenigstens einem der vorhergehenden Ansprüche,
   **dadurch gekennzeichnet,**
   **dass** der mindestens eine periphere Beschleunigungssensor im Frontbereich, im Heckbereich, in der A-Säule, in der B-Säule, in der C-Säule, und/oder dergleichen mit einem vorbestimmten Neigewinkel ($\alpha$) der Messachse (2) montiert ist.

9. Vorrichtung nach wenigstens einem der Ansprüche 2 bis 8,
   **dadurch gekennzeichnet,**
   **dass** mindestens einer der mehreren peripheren Beschleunigungssensoren mit einem vorbestimmten Neigewinkel ($\alpha$) seiner Messachse (2) in Richtung des Frontbereichs und mindestens einer der mehreren peripheren Beschleunigungssensoren mit einem vorbestimmten Neigewinkel ($\alpha$) seiner Messachse (2) in Richtung des Heckbereichs des Fahrzeugs montiert ist.

10. Vorrichtung nach wenigstens einem der vorhergehenden Ansprüche,
   **dadurch gekennzeichnet,**
   **dass** ein Datenvorverarbeitungsmodul (4) mit dem mindestens einen Beschleunigungssensor verbunden ist und das empfangene Signal (a) in Beschleunigungsdaten ($a_X$) bezüglich der Längsachse des Fahrzeugs und in Beschleunigungsdaten ($a_Y$) bezüglich der Querachse des Fahrzeugs durch Berechnung der jeweiligen Projektionen umwandelt.

11. Vorrichtung nach wenigstens einem der Ansprüche 1 bis 9,
   **dadurch gekennzeichnet,**
   **dass** der mindestens eine periphere Beschleunigungssensor die jeweiligen Projektionen ($a_X$; $a_Y$) des empfangenen Beschleunigungssignals (a) auf die Längsachse und die Querachse des Fahrzeugs selbst berechnet.

12. Vorrichtung nach Anspruch 11,
   **dadurch gekennzeichnet,**
   **dass** der mindestens eine periphere Beschleunigungssensor die selbst berechneten Projektionen ($a_X$; $a_Y$) ständig zusammen mit den Beschleunigungssignalen (a) an die Steuereinheit (3) überträgt.

13. Vorrichtung nach wenigstens einem der vorhergehenden Ansprüche,
   **dadurch gekennzeichnet,**
   **dass** zusätzlich mindestens ein, vorzugsweise mehrere uni- und/oder biaxiale Beschleunigungssensoren vorgesehen sind, welche an verschiedenen Positionen im Fahrzeug jeweils mit ihren Messachsen (2) in Richtung der Längsachse und/oder der Querachse des Fahrzeugs montiert sind.

14. Vorrichtung nach wenigstens einem der vorhergehenden Ansprüche,
   **dadurch gekennzeichnet,**
   **dass** mindestens ein peripherer Beschleunigungssensor mit einem vorbestimmten Neigewinkel ($\alpha$) seiner Messachse (2) von etwa 45° jeweils sowohl in der A- als auch in der C-Säule jeder Fahrzeugseite und mindestens ein peripherer Beschleunigungssensor mit einem vorbestimmten Neigewinkel ($\alpha$)seiner Messachse (2) von etwa 45° in Richtung der Längsachse des Fahrzeugs in der B-Säule jeder Fahrzeugseite montiert ist.

15. Vorrichtung nach wenigstens einem der vorhergehenden Ansprüche,
   **dadurch gekennzeichnet,**
   **dass** der mindestens eine periphere Beschleunigungssensor als biaxialer oder triaxialer Beschleunigungssensor ausgebildet ist.

16. Vorrichtung nach wenigstens einem der vorhergehenden Ansprüche,
   **dadurch gekennzeichnet,**
   **dass** eine Speichereinrichtung (5) zum Speichern von Schwellwerten vorgesehen ist, bei deren Überschreitung der mindestens eine periphere Beschleunigungssensor die berechneten Projektionen ($a_X$; $a_Y$) selbst an die Steuereinheit (3) überträgt.

17. Verfahren zur Erkennung eines Unfalls im Kraftfahrzeugbereich mit folgenden Schritten:

   Erfassen von Beschleunigungsdaten (a) im Falle eines Unfalls mittels mindestens eines peripheren Beschleunigungssensors (1, 7, 8, 9, 10, 11, 12, 13, 14), welcher zum Erfassen eines kombinierten Signals, bestehend aus Beschleunigungsdaten ($a_X$) bezüglich der Längsachse des Fahrzeugs und aus Beschleunigungsdaten ($a_Y$) bezüglich der Querachse des Fahrzeugs, mit seiner Messachse (2) in der durch die Längsachse und die Querachse des Fahrzeugs aufgespannten Ebene unter einem vorbestimmten Neigewinkel ($\alpha$) bezüglich der Querachse geneigt in dem Fahrzeug montiert wird; und
   Umwandeln der erfassten Beschleunigungsdaten (a) in Beschleunigungsdaten ($a_X$) bezüglich der Längsachse des Fahrzeugs und in Beschleunigungsdaten ($a_Y$) bezüglich der Querachse des Fahrzeugs durch Berechnung der jeweiligen Projektionen.

18. Verfahren nach Anspruch 17,
   **dadurch gekennzeichnet,**
   **dass** der Neigewinkel ($\alpha$) zwischen 30° und 60°, vorzugsweise in etwa mit 45° ausgewählt wird.

19. Verfahren nach Anspruch 17 oder 18,
   **dadurch gekennzeichnet,**
   **dass** das erfasste kombinierte Beschleunigungssignal (a) mittels eines Datenvorverarbeitungsmoduls (4) in Beschleunigungsdaten ($a_X$) bezüglich der Längsachse des Fahrzeugs und in Beschleunigungsdaten ($a_Y$) bezüglich der Querachse des Fahrzeugs durch Berechnung der jeweiligen Projektionen umgewandelt wird.

20. Verfahren nach Anspruch 17 oder 18,
    **dadurch gekennzeichnet,**
    **dass** die jeweiligen Projektionen ($a_X$; $a_Y$) des empfangenen Beschleunigungssignals (a) mittels des jeweiligen peripheren Beschleunigungssensors auf die Längsachse und die Querachse des Fahrzeugs selbst berechnet werden.

21. Verfahren nach Anspruch 20,
    **dadurch gekennzeichnet,**
    **dass** die selbst berechneten Projektionen ($a_X$; $a_Y$) ständig zusammen mit den Beschleunigungssignalen (a) an die zentrale Steuereinheit (3) übertragen werden.

22. Verfahren nach Anspruch 21,
    **dadurch gekennzeichnet,**
    **dass** die berechneten Projektionen ($a_X$; $a_Y$) lediglich bei einer Überschreitung vorbestimmter Schwellwerte von dem jeweiligen Beschleunigungssensor an die zentrale Steuereinheit (3) übertragen werden, wobei die vorbestimmten Schwellwerte in einer Speichereinrichtung (5) abgespeichert werden.

## Fig. 1

$$a_x = |a|\sin(\alpha)$$

$$a_y = |a|\cos(\alpha)$$

## Fig. 2

Fig. 3

Fig. 4

Fig. 5

Fig. 6

Fig. 7

**Europäisches Patentamt**

# EUROPÄISCHER RECHERCHENBERICHT

Nummer der Anmeldung

EP 05 10 3685

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 37 546 A1 (TEMIC TELEFUNKEN MICROELECTRONIC GMBH, 74072 HEILBRONN, DE; CONTI TEMI) 10. April 1997 (1997-04-10) * Spalte 1, Zeile 3 - Spalte 2, Zeile 27; Ansprüche; Abbildungen * ----- | 1-22 | B60R21/01 |
| X | DE 196 19 412 C1 (TEMIC TELEFUNKEN MICROELECTRONIC GMBH, 74072 HEILBRONN, DE) 28. August 1997 (1997-08-28) * Seite 2, Zeile 43 - Seite 3, Zeile 32 * | 1-4,8,13 | |
| A | | 5-7, 9-12, 14-17 | |
| | * Seite 3, Zeile 58 - Zeile 60; Abbildung 3 * ----- | | |
| P,X | WO 2005/014343 A (CONTI TEMIC MICROELECTRONIC GMBH; FENDT, GUENTER; HELLDOERFER, REINHAR) 17. Februar 2005 (2005-02-17) * Seite 1, Zeile 5 - Seite 2, Zeile 15 * * Seite 4, Zeile 15 - Seite 8, Zeile 28; Abbildungen * ----- | 1-4,8,13 | |
| P,X | WO 2005/007460 A (AUTOLIV DEVELOPMENT AB; NICAISE, JEAN-LOUIS) 27. Januar 2005 (2005-01-27) * Seite 1, Zeile 10 - Seite 4, Zeile 20; Abbildungen * ----- | 1-4,8,13 | RECHERCHIERTE SACHGEBIETE (Int.Cl.7)<br><br>B60R |
| A | US 6 023 664 A (BENNET ET AL) 8. Februar 2000 (2000-02-08) * Spalte 5, Zeile 5 - Spalte 6, Zeile 40; Abbildungen * ----- | 1,17 | |
| A | WO 02/16169 A (SIEMENS AKTIENGESELLSCHAFT; SCHMIDT, CLAUS) 28. Februar 2002 (2002-02-28) * Seite 5, Zeile 22 - Seite 6, Zeile 33; Abbildungen * ----- | 1,17 | |

Der vorliegende Recherchenbericht wurde für alle Patentansprüche erstellt

| Recherchenort | Abschlußdatum der Recherche | Prüfer |
|---|---|---|
| Den Haag | 27. September 2005 | Daehnhardt, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 10 3685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 19537546 | A1 | 10-04-1997 | KEINE | | |
| DE 19619412 | C1 | 28-08-1997 | EP | 0810129 A2 | 03-12-1997 |
| | | | ES | 2151204 T3 | 16-12-2000 |
| | | | US | 6115659 A | 05-09-2000 |
| WO 2005014343 | A | 17-02-2005 | DE | 10335169 A1 | 24-02-2005 |
| | | | DE | 112004000041 D2 | 02-06-2005 |
| WO 2005007460 | A | 27-01-2005 | GB | 2403935 A | 19-01-2005 |
| US 6023664 | A | 08-02-2000 | CA | 2267863 A1 | 07-05-1998 |
| | | | EP | 0932832 A1 | 04-08-1999 |
| | | | JP | 2002515977 T | 28-05-2002 |
| | | | WO | 9819171 A1 | 07-05-1998 |
| WO 0216169 | A | 28-02-2002 | DE | 50006443 D1 | 17-06-2004 |
| | | | EP | 1311411 A1 | 21-05-2003 |
| | | | JP | 2004506570 T | 04-03-2004 |
| | | | US | 6859706 B1 | 22-02-2005 |

EPO FORM P0461

Für nähere Einzelheiten zu diesem Anhang : siehe Amtsblatt des Europäischen Patentamts, Nr.12/82